# EUROPEAN PATENT APPLICATION

(11) **EP 3 260 941 A1**
(43) Date of publication of application: **27.12.2017**
(21) Application number: 16752537.7
(22) Date of filing: 18.02.2016
(51) Int. Cl.: G05B 23/02

(54) **PLANT INSTRUMENT STATUS COLLECTION SYSTEM**

(30) Priority: 19.02.2015 JP 2015030877; 04.02.2016 JP 2016020244
(71) Applicant: Nippon Seiki Co., Ltd., Nagaoka-shi, Niigata 940-8580 (JP)
(72) Inventor: OTA,Satoshi, Nagaoka Niigata 940 85-80 (JP); MASUDA,Hideki, Nagaoka Niigata 940 85-80 (JP)
(74) Representative: Carpmaels & Ransford LLP
(86) International application number: PCT/JP2016/054661
(87) International publication number: WO 2016/133151

(57) **Abstract**

Provided is a plant instrument status collection system making it possible to more accurately manage operation information for plant instruments. A plant equipment status collection system 1 according to the present invention comprises detection apparatuses 10, a portable terminal 40, a network construction apparatus 20, and a data storage apparatus 30. The portable terminal 40 comprises a tag control unit that is capable of automatically and contactlessly acquiring specific information and date/time information stored in a tag unit of the detection apparatuses 10 and is configured to be in communication with the data storage apparatus 30, wherein the portable terminal 40 selects the specific information of any of the detection apparatuses 10 in advance, determines whether or not the specific information acquired from the tag unit and the selected specific information are consistent, times this synchronously with the date/time information acquired from the tag unit in cases where these are consistent, and makes it possible to transmit operation content information representing predetermined operation content for the plant instruments, the selected specific information, and synchronized operation completion date/time information to the data storage apparatus 30.

## Description

### TECHNICAL FIELD

The present invention relates to a plant instrument status collection system. More particularly, the present invention relates to a plant instrument status collection system which accurately manages work information of a plant instrument.

### BACKGROUND ART

Patent Literature 1 discloses a wireless remote operation determination device of a steam trap (a plant instrument status collection system), for example. The plant instrument status collection system described in Patent Literature 1 detects temperature, vibration, and so forth associated with an operation of a steam trap which is one of the plant instrument, and determines quality of an operating state of the steam trap. The plant instrument status collection system described in Patent Literature 1 includes a transmission device (a detection apparatus) which has a transmission band width matched with the steam trap on a one-on-one basis and is attached to the steam trap, and an operation determination device having a reception device of which receiving band width is variable.

A detection apparatus of the plant instrument status collection system described in Patent Literature 1 is provided with a storage unit storing specifying information, measurement condition, and so forth of the attached steam trap, and transmits detected data of temperature and vibration of the steam trap together with the specifying information, the measurement condition, and so forth. The operation determination device of the plant instrument status collection system described in Patent Literature 1 can receive temperature, vibration, specifying information, measurement condition, and so forth of the steam trap transmitted from the detection apparatus when the receiving band width is adjusted to the transmitting band width provided in the detection apparatus. The operation determination device of the plant instrument status collection system described in Patent Literature 1 can determine an operating state of the steam trap based on the received temperature, vibration, specifying information, measurement condition, and so forth of the steam trap.

Therefore, in the plant instrument status collection system described in Patent Literature 1, it is unnecessary for an operator to bring the operation determination device into direct contact with the steam trap to detect temperature, vibration, and so forth of the steam trap. Further, it is unnecessary for the operator to input specifying information, measurement condition, and so forth of the steam trap of an operation determination target into an operation determination device each time operation determination of the steam trap is performed. Therefore, the plant instrument status collection system described in Patent Literature 1 can reduce an effort of the operator relating to the operation determination of the steam trap.

### CITATION LIST

### PATENT LITERATURE

Patent Literature 1: Japanese Unexamined Patent Application Publication No. 7-35880
Patent Literature 2: Japanese Patent Application Publication No. 2011-86012

### PROBLEMS TO BE SOLVED BY THE INVENTION

In the plant instrument status collection system described in Patent Literature 1, when making operation determination of a steam trap of measurement target, the operator needs to adjust the receiving band width of the reception unit of the operation determination device to a specific transmitting band width correlated with a desired steam trap. Further, in the plant instrument status collection system, the operator needs to carry the operation determination device when moving around so that the operation determination device is in an area in which data transmitted by the detection apparatus attached to the steam trap of measurement target is receivable. Then, in the plant instrument status collection system described in Patent Literature 1, it is assumed that a steam trap of which operating state is an abnormal state cannot be found promptly. It is assumed that this issue may become more significant as the plant significantly increases in size, or increases in number of plant instruments.

To resolve this issue, a plurality of detection apparatuses may be connected using a wireless network, for example. Operating states of a plurality of steam traps can be determined simultaneously without adjustment of the receiving band width of the reception unit of the operation determination device for each steam trap of measurement target by connecting a plurality of detection apparatuses using a wireless network. A concept of connecting a plant instrument using a wireless network is disclosed in Patent Literature 2.

In a plant, there are many works that need to be performed manually by an operator, such as maintenance work (repair, replacement) when a state of a plant instrument detected by a detection apparatus is abnormal, inspection work, or daily operation work. Generally, information about the work, such as an instrument ID of a detection apparatus provided at the plant instrument for which the work is performed, work contents, and a work date, is managed by the operator manually inputting into a terminal in the plant and transmitting to a server as daily work report information, or writing in a paper-based book.

However, since the input work of information is complicated in these management methods and especially the work date is input depending on the operator's memory, such methods require improvement in terms of accurate management of work information.

The present invention is made in view of the problems described above, and provides a plant instrument status collecting system capable of more accurately managing work information about plant instruments.

### MEANS FOR SOLVING THE PROBLEM

A plant instrument status collection system of the present invention includes a detection apparatus, a portable terminal, a network construction apparatus, and a data storage apparatus, wherein the detection apparatus includes a detection unit detecting a state of plant equipment disposed in a plant, a network connection unit connectable to a network constructed by the network construction apparatus, and a clocking unit clocking date, and a tag unit storing specifying information for specifying the detection apparatus and date information, and capable of contactlessly transmitting the specifying information and the date information to the portable terminal, at least transmits the state of the plant instrument detected by the detection unit and specifying information to the network construction apparatus via the network, the data storage apparatus includes a storage unit at least storing the state of the plant equipment received from the network construction apparatus, and the specifying information of the detection apparatus, and the portable terminal includes a tag control unit capable of contactlessly and automatically acquirable the specifying information and the date information which are stored in the tag unit, and is configured to be able to communicate with the data storage apparatus, selects the specifying information of any of the detection apparatus in advance, and determines whether the specifying information acquired from the tag unit and the selected the specifying information match each other, clocks date in synchronization with the date information acquired from the tag unit if these match each other, and makes it possible to transmit the selected specifying information clocked work completion date information together with work contents information indicating predetermined work contents with respect to the plant instrument to the data storage apparatus.

### EFFECT OF THE INVENTION

According to the present invention, work information about a plant instrument can be managed more accurately.

### BRIEF DESCRIPTION OF THE DRAWINGS

[Fig. 1] Fig. 1 is a diagram illustrating an example of an entire configuration of a plant instrument status collection system of the present invention.
[Fig. 2A] Fig. 2A is a diagram illustrating an example of an internal structure of each component of the plant instrument status collection system illustrated in Fig. 1.
[Fig. 2B] Fig. 2B is a diagram illustrating an example of a data structure of network construction information stored in a network construction apparatus illustrated in Fig. 1 and an example of a data structure of plant information stored in a data storage apparatus illustrated in Fig. 1.
[Fig. 2C] Fig. 2C is a diagram illustrating an example of an operation of storage of information in a tag unit of a detection apparatus and acquisition of information from the tag unit by a tag control unit of a portable terminal illustrated in Fig. 2A.
[Fig. 3A] Fig. 3A is a flowchart illustrating an example of an operation to collect states of plant instruments by the plant instrument status collection system illustrated in Fig. 1.
[Fig. 3B] Fig. 3B is a diagram illustrating an example of a data structure used in the operation illustrated in Fig. 3A.
[Fig. 3C] Fig. 3C is a diagram illustrating a display example of a laptop computer displayed in the operation illustrated in Fig. 3A.
[Fig. 4A] Fig. 4A is a flowchart illustrating an example of an operation when performing maintenance work based on states of plant instruments collected in the operation illustrated in Fig. 3A.
[Fig. 4B] Fig. 4B is a diagram illustrating an example of a data structure used in the operation illustrated in Fig. 4A.
[Fig. 4C] Fig. 4C is a diagram illustrating a display example of a laptop computer displayed in the operation illustrated in Fig. 4A.
[Fig. 4D] Fig. 4D is a diagram illustrating a display example of a portable terminal displayed in the operation illustrated in Fig. 4A.
[Fig. 4E] Fig. 4E is a diagram illustrating a display example of the portable terminal displayed in the operation illustrated in Fig. 4A.
[Fig. 4F] Fig. 4F is a diagram illustrating a display example of the portable terminal displayed in the operation illustrated in Fig. 4A, and an audio example of the portable terminal output as voice.
[Fig. 4G] Fig. 4G is a diagram illustrating a display example of the portable terminal displayed in the operation illustrated in Fig. 4A, and an audio example of the portable terminal output as voice.
[Fig. 4H] Fig. 4H is a diagram illustrating a display example of the portable terminal displayed in the operation illustrated in Fig. 4A.
[Fig. 4I] Fig. 4I is a diagram illustrating a display example of the portable terminal displayed in the operation illustrated in Fig. 4A.
[Fig. 4J] Fig. 4J is a diagram illustrating a display example of the portable terminal displayed in the operation illustrated in Fig. 4A.
[Fig. 4K] Fig. 4K is a diagram illustrating a display example of a laptop computer displayed in the operation illustrated in Fig. 4A.
[Fig. 4L] Fig. 4L is a diagram illustrating a display example of the laptop computer displayed in the operation illustrated in Fig. 4A.
[Fig. 5] Fig. 5 is a diagram illustrating another example of a detection apparatus.
[Fig. 6A] Fig. 6A is a flowchart illustrating an example of an operation to collect states of plant instruments by the plant instrument status collection system including the another detecting device.
[Fig. 6B] Fig. 6B is a diagram illustrating an example of a data structure used in the operation illustrated in Fig. 6A.

### MODE FOR CARRYING OUT THE INVENTION

Hereinafter, desirable embodiments of the present invention are described. The present invention is not limited to the embodiments described hereinafter, and various modifications (including deletion of components) and so forth can be made without departing from the scope of the present invention.

### 1. Entire Configuration

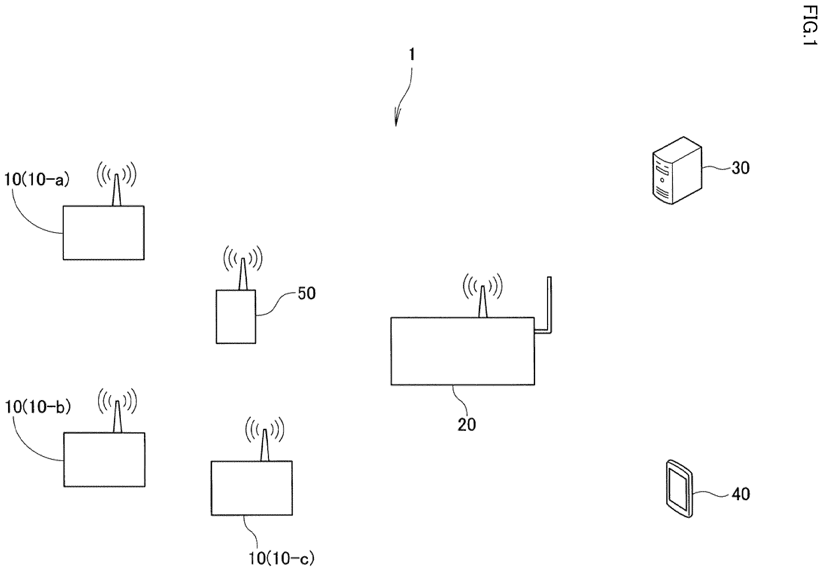

As illustrated in Fig. 1, a plant instrument status collection system 1 is provided with a detection apparatus 10, a network construction apparatus 20, a data storage apparatus 30, and a portable terminal 40. A plurality of detection apparatuses 10 are provided, and each of the detection apparatuses 10 is attached to a corresponding plant instrument among a plurality of plant instruments disposed in an unillustrated plant. A plurality of detection apparatuses 10 may be connected to a wireless sensor network (WSN) based on the standards of a wireless LAN (local area network) and ZigBee (registered trademark) constructed by the network construction apparatus 20, for example. The WSN is desirably a mesh type network. That is, a plurality of detection apparatuses 10 desirably connect to the network construction apparatus 20, and each detection apparatus 10 (for example, a detection apparatus 10-b) desirably connects also to one or a plurality of other adjoining detection apparatuses 10 (for example, detection apparatuses 10-a and detection apparatus 10-c). If there is a detection apparatus 10 that cannot connect directly to the WSN because, for example, it is located at a long distance from the network construction apparatus 20 (for example, the detection apparatus 10-a), the plant instrument status collection system 1 may further include a repeater 50 and may interpolate a connectable range of the WSN.

The network construction apparatus 20 is configured to be able to use a mobile communication, such as 3G line or LTE (Long Term Evolution) line. Hereinafter, the "mobile communication, such as 3G line or LTE line," is also referred to as "3G/LTE." The network construction apparatus 20 is configured to be able to communicate with the data storage apparatus 30 via the 3G/LTE. Although three detection apparatuses 10-a, 10-b, and 10-c are illustrated to be connected to the WSN constructed by the network construction apparatus 20 in the example illustrated in Fig. 1, the number of the detection apparatuses 10 connected to the WSN may be four or more, or may be one or two. In an actual plant instrument status collection system 1, a plurality of network construction apparatuses (the network construction apparatus 20 of Fig. 1 and one or a plurality of unillustrated other network construction apparatuses) are provided. A plurality of unillustrated detection apparatuses are connected to the one or a plurality of unillustrated other network construction apparatuses in the same manner as in Fig. 1.

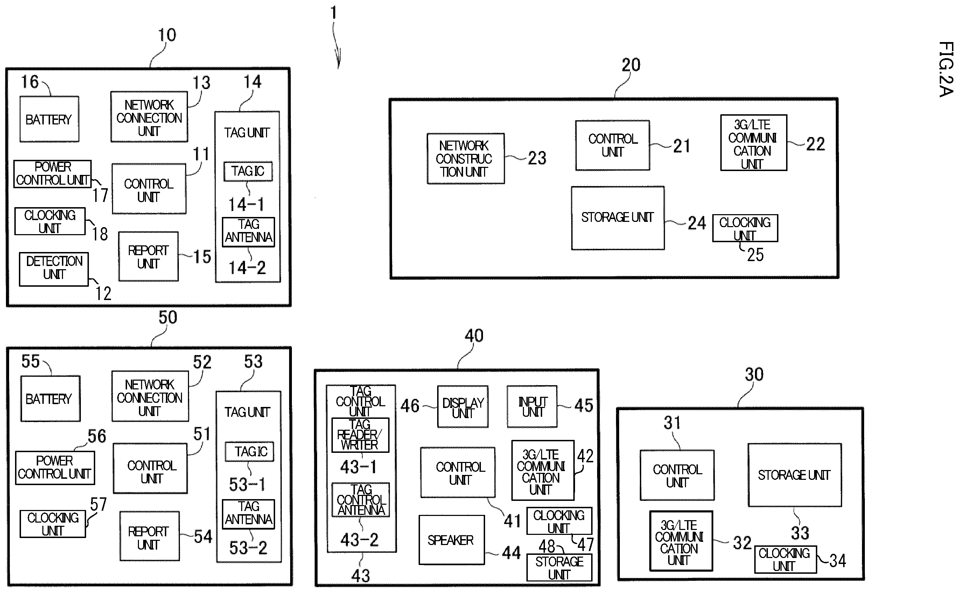

Fig. 2A illustrates an example of an internal configuration of each component of the plant instrument status collection system 1 illustrated in Fig. 1. The detection apparatus 10 illustrated in Fig. 2A includes a control unit 11, a detection unit 12, a network connection unit 13, a tag unit 14, and a report unit 15. Since the detection apparatus 10 is assumed to be attached to a position at which power is difficult to be supplied with an unillustrated power cable and so forth, the detection apparatus 10 desirably further includes a battery 16. The detection apparatus 10 may further include a power control unit 17 for controlling power supply from a power cable or the battery 16 to at least one of the control unit 11, the detection unit 12, the network connection unit 13, the tag unit 14, and the report unit 15, for example. The power control unit 17 is provided with a self-hold circuit which has a switching element, such as a relay sequence or a transistor, for example. Hereinafter, the "detection apparatus 10" is also referred to as a "sensor module 10." The detection apparatus 10 is provided with a predetermined clock circuit, and further includes a clocking unit 18 which clocks date. The clocking unit 18 is supplied with power from the battery 16 and clocks date (including day, the same hereinafter) irrespective of the state of the power control unit 17.

The control unit 11 of the detection apparatus 10 controls operations of the detection unit 12, the network connection unit 13, the tag unit 14, and the report unit 15, for example. The control unit 11 may be configured to be able to acquire a remaining amount of the battery 16, for example. The detection unit 12 of the detection apparatus 10 detects a state of the plant instrument to which the detection apparatus 10 is attached. Here, the plant instrument is a steam trap, a rotating machine, and so forth, and the state of the plant instrument is temperature, vibration, humidity, pressure, ph, and so forth of the plant instrument.

The network connection unit 13 of the detection apparatus 10 is configured to be able to connect to the WSN constructed by the network construction apparatus 20. The tag unit 14 of the detection apparatus 10 is a RF (Radio Frequency) tag which has a tag IC 14-1 and a tag antenna 14-2 used for NFC (Near Field Communication), for example. The tag unit 14 is configured such that a later-described tag control unit 43 of the portable terminal 40 can store information by contactlessly writing in the tag IC 14-1, for example, and can acquire information stored in the tag IC 14-1 by reading contactlessly, for example. Here, "contactless" means that the tag unit 14 of the detection apparatus 10 and the tag control unit 43 of the portable terminal 40 are not in direct or indirect mechanical contact by wiredly connecting the tag unit 14 of the detection apparatus 10 and the tag control unit 43 of the portable terminal 40 with a cable, for example. A sensor ID which is specifying information for specifying the detection apparatus 10 is stored in the tag unit 14, specifically in the tag IC 14-1, in advance.

The report unit 15 of the detection apparatus 10 is an LED, a buzzer, and so forth, which starts or stops under the control of the control unit 11. The battery 16 of the detection apparatus 10 supplies power at least to the control unit 11 when the detection apparatus 10 is in a power on state. The power may be supplied to the detection unit 12, the network connection unit 13, the tag unit 14, and the report unit 15 via the control unit 11 or not via the control unit 11, for example.

The network construction apparatus 20 illustrated in Fig. 2A includes a control unit 21, a 3G/LTE communication unit 22, a network construction unit 23, a storage unit 24, and a clocking unit 25. Hereinafter, the "network construction apparatus 20" is also referred to as a "sensor gate module 20."

The control unit 21 of the network construction apparatus 20 controls operations of the 3G/LTE communication unit 22, the network construction unit 23, and the storage unit 24, for example. Since the network construction apparatus 20 includes the 3G/LTE communication unit 22, the network construction apparatus 20 is connectable to the 3G/LTE. Since the network construction apparatus 20 includes the network construction unit 23, the network construction apparatus 20 can construct the WSN. The WSN constructed by the network construction apparatus 20 is provided with, for example, a network ID which is network specifying information for specifying that the WSN is constructed by a specific network construction apparatus 20.

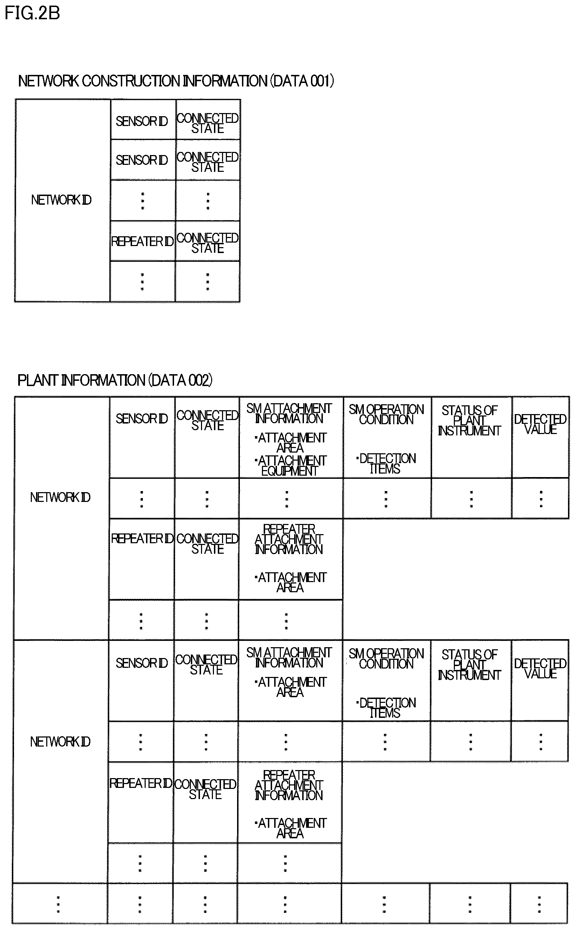

The storage unit 24 of the network construction apparatus 20 stores network construction information (data 001) of the WSN constructed by the network construction apparatus 20 illustrated in Fig. 2B, for example. The network construction information (data 001) includes, for example, a network ID, and a list of sensor IDs of the detection apparatuses 10 connected to the WSN specified by the network ID, and connected states to the WSN of these detection apparatuses 10. If the repeaters 50 are connected to the WSN specified by the network ID, the network construction information (data 001) may further include repeater IDs and connected states to the WSN of the repeaters. The clocking unit 25 of the network construction apparatus 20 is provided with a predetermined clock circuit, and clocks date (day and time) all the time.

The data storage apparatus 30 illustrated in Fig. 2A includes a control unit 31, a 3G/LTE communication unit 32, a storage unit 33, and a clocking unit 34. Hereinafter, the "data storage apparatus 30" is also referred to as a "cloud server 30."

The storage unit 33 of the data storage apparatus 30 stores plant information (data 002) illustrated in Fig. 2B, for example. The plant information (data 002) includes, for example, a plurality of network IDs, sensors ID of the detection apparatuses 10 connected to the WSN specified by each network ID, connected states of the detection apparatuses 10, attachment information of the detection apparatuses 10 (SM (sensor module) attachment information), operation conditions of the detection apparatuses 10 (SM operation conditions), and states of the plant instrument, detection values detected by the detection apparatuses 10. The attachment information of the detection apparatus 10 includes an attachment area, such as an address in the plant, and attachment equipment, such as a pipe number to which the detection apparatus 10 is attached, for example. The operation conditions of the detection apparatus 10 include detection items to be detected by the detection unit 12 of the detection apparatus 10, for example. If WSNs to which the repeaters 50 are connected exist, the plant information (data 002) may further include repeater IDs, connected states to these WSNs, and attachment information of the repeaters. The plant information (data 002) include all the items of the network construction information (data 001). The clocking unit 34 of the data storage apparatus 30 is provided with a wave clock circuit, for example, capable of highly precisely clocking date, and clocks date all the time. In the present embodiment, the clocking unit 34 clocks date which is a reference date in the WSN (hereinafter, also referred to as "WSN time"). The data storage apparatus 30 transmits WSN time information clocked by the clocking unit 34 to the detection apparatus 10, the network construction apparatus 20, and the repeater 50 via the WSN. Each of the clocking units 18, 25, 34, and 57 of each of the devices 10, 20, and 50 which received the WSN time information synchronizes date with the received WSN time information (time synchronization). Therefore, among the detection apparatus 10, the network construction apparatus 20, the data storage apparatus 30, and the repeater 50 connected to the WSN, a state where the date clocked thereinside is synchronized is maintained all the time. The method for time synchronization in the WSN is not limited to that described above but other publicly known methods may be employed.

The portable terminal 40 illustrated in Fig. 2A includes a control unit 41, a 3G/LTE communication unit 42, a tag control unit 43, a speaker 44, an input unit 45, a display unit 46, a clocking unit 47, and a storage unit 48. Hereinafter, the "portable terminal 40" is also referred to as a "tablet terminal 40."

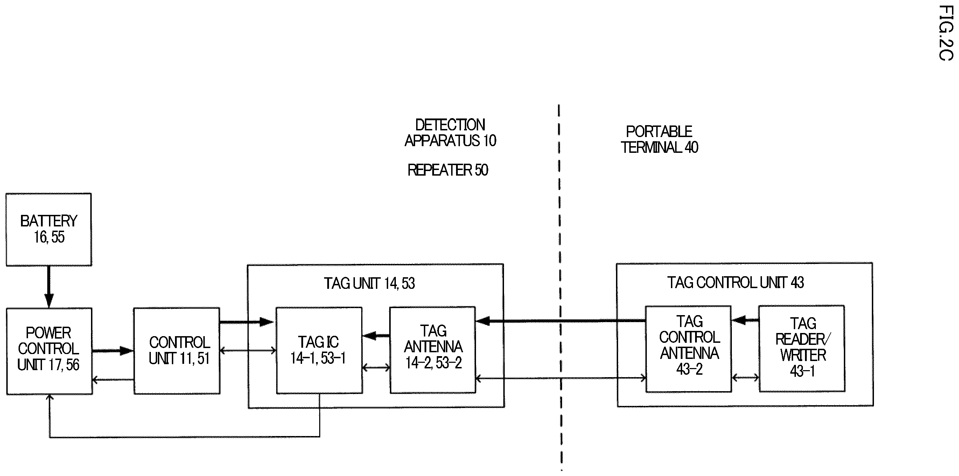

The tag control unit 43 of the portable terminal 40 includes a tag reader/writer 43-1, and a tag control antenna 43-2. Storage of information in the tag unit 14 of the detection apparatus 10 and acquisition of information from the tag unit 14 by the tag control unit 43 are automatically performed when the portable terminal 40 is held over the detection apparatus 10, that is, when the portable terminal 40 is brought close to a predetermined distance (for example, 10 cm) from the detection apparatus 10, for example. Specific operations of storage of information in the tag unit 14 of the detection apparatus 10 and acquisition of information from the tag unit 14 by the tag control unit 43 are described later with reference to Fig. 2C. The speaker 44 of the portable terminal 40 outputs predetermined voice under the control of the control unit 41. The input unit 45 and the display unit 46 of the portable terminal 40 may be configured by a touch-sensitive display panel modules 45 and 46, for example. Hereinafter, the "touch-sensitive display panel modules 45 and 46" are also referred to as "touch panels 45 and 46." The clocking unit 47 of the portable terminal 40 is provided with a predetermined clock circuit, and clocks date all the time. The storage unit 48 of the portable terminal 40 stores various types of information.

An application associated with the plant instrument status collection system 1 is installed in the portable terminal 40, for example. For example, by executing the application, an operator working in the plant can do work of viewing and editing the plant information stored in the data storage apparatus 30 (data 002), a network connection of the detection apparatuses 10, and so forth using the portable terminal 40. Hereinafter, the "application associated with the plant instrument status collection system 1" is also referred to as a "plant application." However, the operator may do work of viewing and editing of the plant information stored in the storage device 30 (data 002), a network connection of the detection apparatuses 10, and so forth by using a web browser, for example, and not executing the plant application.

Further, a manager of the plant may view and edit the plant information (data 002) via the 3G/LTE by using a communication terminal, such as an unillustrated laptop computer connectable to the 3G/LTE. Therefore, the manager may monitor the state of the plant instrument distantly without directly monitoring the plant instrument and, if an abnormal state is found, may issue an instruction of repair work and so forth to the operator who carries the portable terminal 40.

The repeater 50 illustrated in Fig. 2A includes a control unit 51, a network connection unit 52, a tag unit 53, a report unit 54, a battery 55, a power control unit 56, and a clocking unit 57. The repeater 50 has substantially the same internal structure as that of the detection apparatus 10, but is different from the detection apparatus 10 in that the repeater 50 has no detection unit.

Examples of operations of storage of information in the tag unit 14 of the detection apparatus 10 and acquisition of information from the tag unit 14 by the tag control unit 43 of the portable terminal 40 are described with reference to Fig. 2C. In Fig. 2C, thin arrows in the drawing represent signals, such as instructions, and thick arrows in the drawing represent power supply. Since operations of storage of information in the tag unit 53 of the repeater 50 and acquisition of information from the tag unit 53 by the tag control unit 43 of the portable terminal 40 are the same, description thereof is omitted.

When the portable terminal 40 is held over the detection apparatus 10, The tag control unit 43 of the portable terminal 40 transmits a read signal or a write signal generated by the tag reader/writer 43-1, for example, to the detection apparatus 10 on an electric wave or a magnetic field generated by the tag control antenna 43-2, for example. In the tag unit 14 of the detection apparatus 10, the electric wave received by the tag antenna 14-2 is rectified or electromagnetic induction by the magnetic field received by the tag antenna 14-2 is performed, whereby power is generated in the tag antenna 14-2. The tag antenna 14-2 supplies generated power to the tag IC 14-1, and the tag IC 14-1 is started. If the signal included in the electric wave or the magnetic field received by the tag antenna 14-2 is a read signal, the started tag IC 14-1 replies information stored in the tag IC 14-1 in accordance with the read signal on the electric wave or the magnetic field generated by the tag antenna 14-2. If the signal included in the electric wave or the magnetic field received by the tag antenna 14-2 is a write signal, the started tag IC 14-1 stores the information included in the write signal.

Therefore, when the tag control unit 43 of the portable terminal 40 stores information in the tag unit 14 and acquires information from the tag unit 14, it is unnecessary to supply power to the tag unit 14 from the inside of the detection apparatus 10. That is, also when the detection apparatus 10 is in a power off state or a sleep state, the tag control unit 43 of the portable terminal 40 can store the information in the tag unit 14 of the detection apparatus 10 and acquire information from the tag unit 14.

The tag IC 14-1 started by the electric wave or the magnetic field received by the tag antenna 14-2 outputs a start signal to the power control unit 17, for example. The power control unit 17 into which the start signal is input supplies power, which is supplied from the battery 16 to the power control unit 17, at least to the control unit 11, for example. For example, when the control unit 11 to which power is supplied is started, the detection apparatus 10 is set to a power on state. That is, the detection apparatus 10 is configured to be set to a power on state when information is stored in the tag unit 14 by the tag control unit 43 of the portable terminal 40. When the power of the detection apparatus 10 is in an on state, the control unit 11 supplies power to the tag IC 14-1 of the tag unit 14, whereby storage of information in the tag IC or acquisition of information stored in the tag IC can be performed.

Further, when the detection apparatus 10 which is in a power on state is set to a power off state or a sleep state, the control unit 11 outputs a stop signal or a sleep signal to the power control unit 17. The power control unit 17 into which the stop signal or the sleep signal is input stops or reduces an amount of power supply to at least the control unit 11, for example. For example, when power supply to the control unit 11 is stopped, the detection apparatus 10 is set to a power off state, and when an amount of power supply to the control unit 11 is reduced, the detection apparatus is set to a sleep state.

### 2. Operation of Plant Instruments Status Collection System

### 2-1. Collection of Status of Plant Instruments

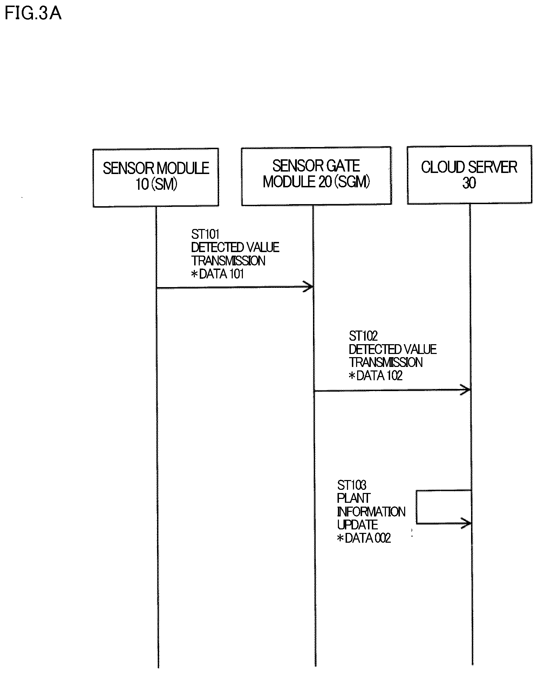

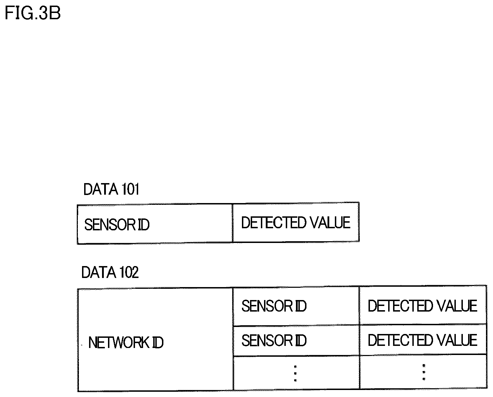

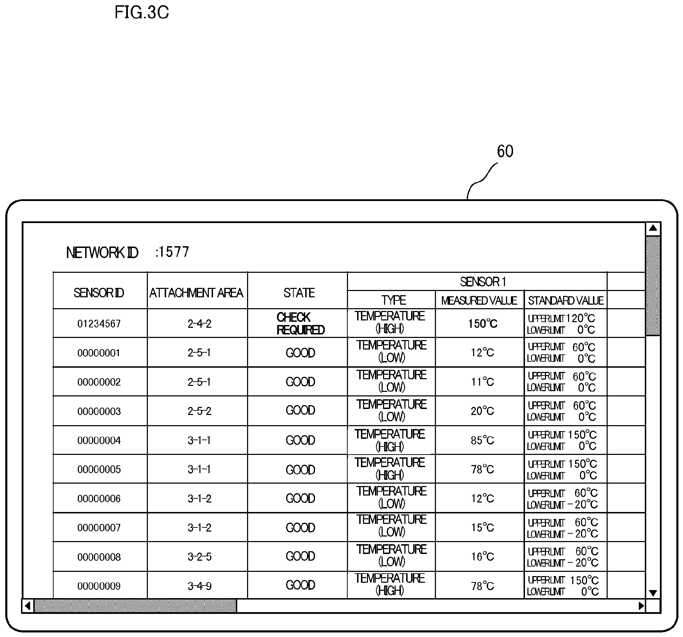

An example of an operation of the plant instrument status collection system 1 to collect states of the plant instrument is described with reference to Figs. 3A, 3B, and 3C. Here, it is assumed that the sensor module 10 is accurately connected to the WSN constructed by the sensor gate module 20.

In step ST101, the sensor module 10 restores from a sleep state and is set to a power on state at each predetermined detection interval by a timer, detects states of the plant instrument to which the sensor module 10 is attached about the predetermined detection items, and transmits a detected value to the sensor gate module 20 together with the sensor ID of itself (the sensor module 10). That is, the data transmitted in step ST101 is data 101 illustrated in Fig. 3B. After transmission of the data 101, the sensor module 10 sets the timer and is set to a sleep state again.

In step ST102, the sensor gate module 20 transmits the received sensor ID and the received detected value to the cloud server 30 via the 3G/LTE together with the network ID of the WSN constructed by itself (the sensor gate module 20). That is, the data transmitted in step ST102 is data 102 illustrated in Fig. 3B.

Here, in step ST102, each time the sensor gate module 20 receives the detected value from one of the sensor modules 10 connected to the WSN constructed by itself (the sensor gate module 20), the sensor gate module 20 may transmit the sensor ID and the detected value together with the network ID. Alternatively, in step ST102, the sensor gate module 20 may temporarily store the received sensor ID and the received detected value, and transmit a plurality of temporarily stored sensor IDs and detected values together with the network IDs for each predetermined transmission interval.

In step ST103, the cloud server 30 makes the received data 102 reflected on the plant information (data 002) stored in the storage unit 33 of the cloud server 30, and updates the plant information (data 002). Step ST101, step ST102, and step ST103 are repeated at any time.

In the plant instrument status collection system 1, the state of the plant instrument detected by the sensor module 10 is automatically reflected on the plant information (data 002) stored in the cloud server 30. Therefore, it is unnecessary for the operator to move to a position at which a target plant instrument is disposed each time the state of the plant instrument is to be detected or confirmed. The manager can monitor the states of the plant instrument distantly by using a laptop computer 60, connecting to the cloud server 30, and viewing the plant information (data 002) stored in the cloud server 30 as illustrated in Fig. 3C. A terminal used by the manager is not limited to the laptop computer 60, but may be an arbitrary terminal, such as a desktop PC connectable to the cloud server 30.

### 2-2. Maintenance Work

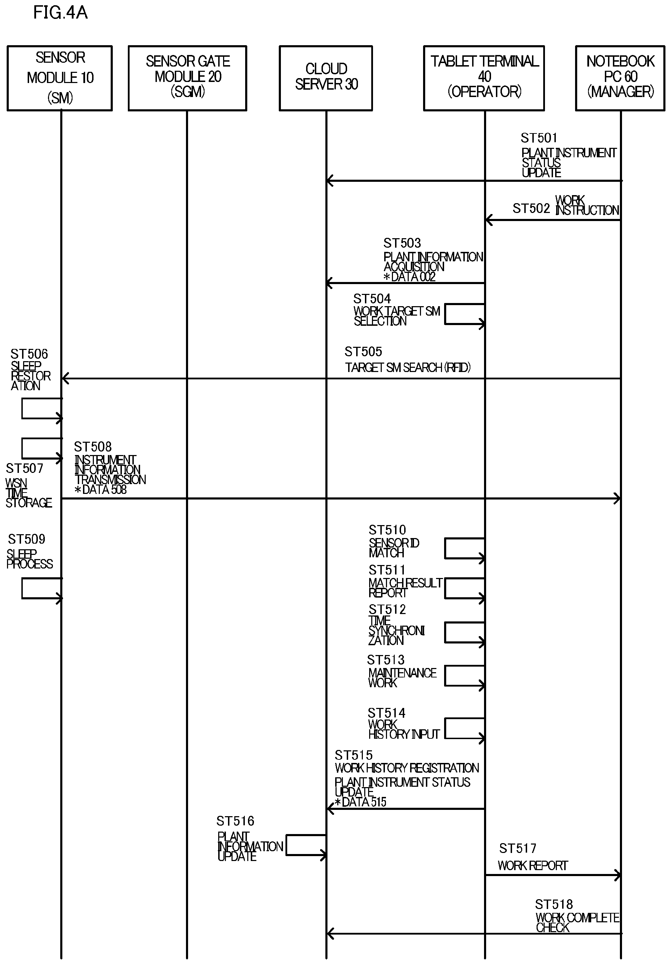

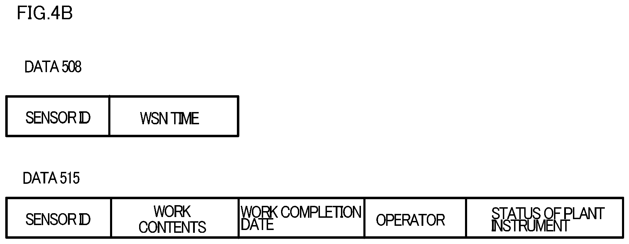

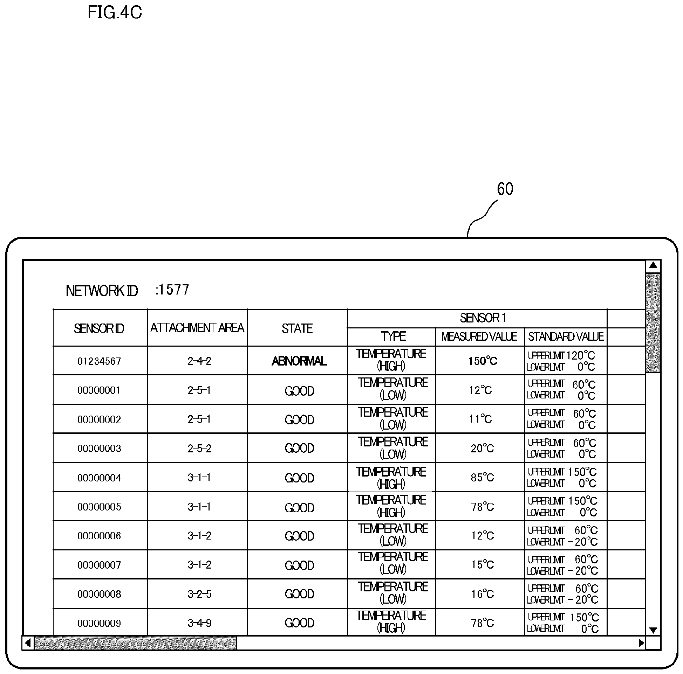

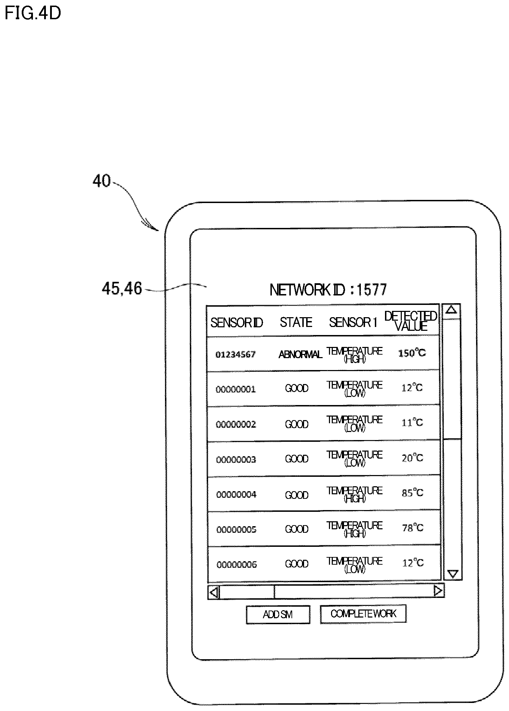

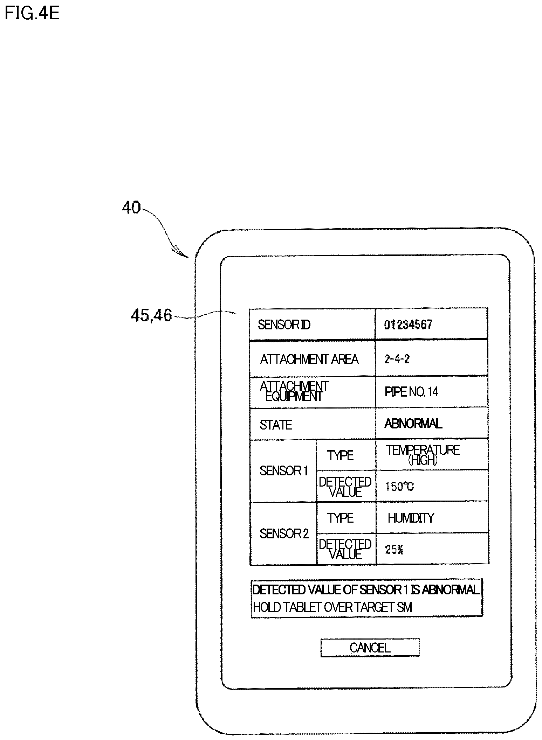

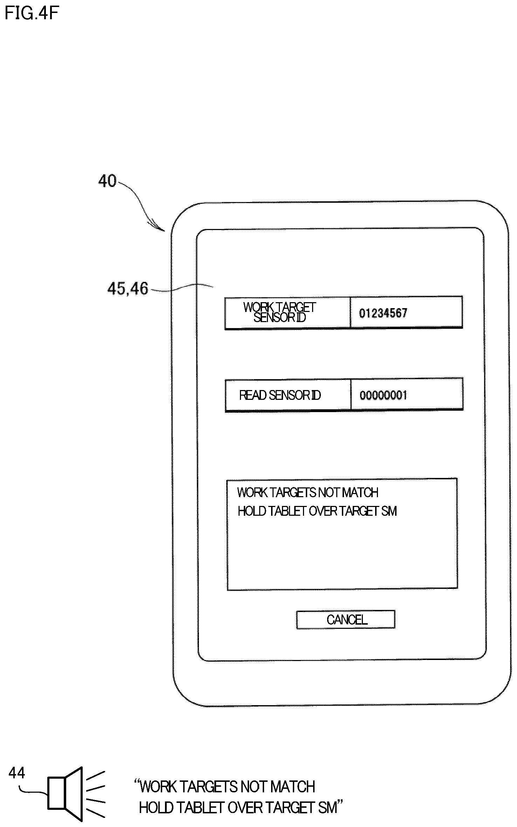

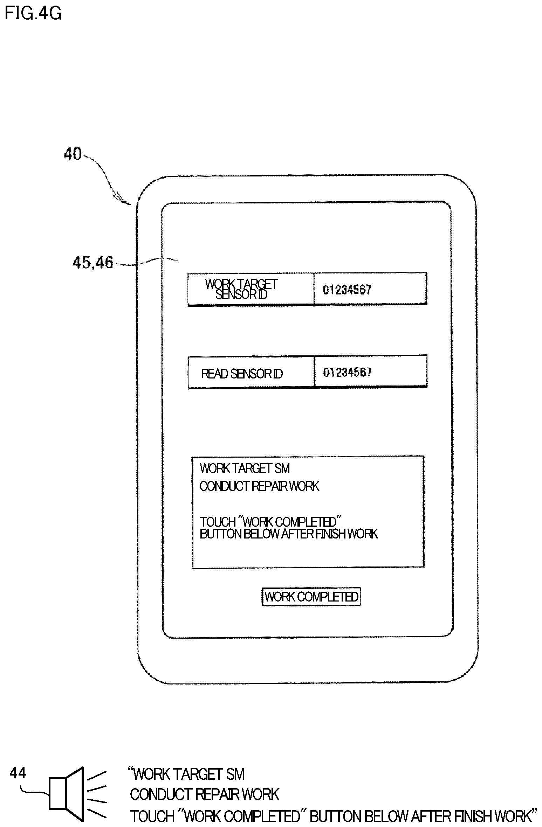

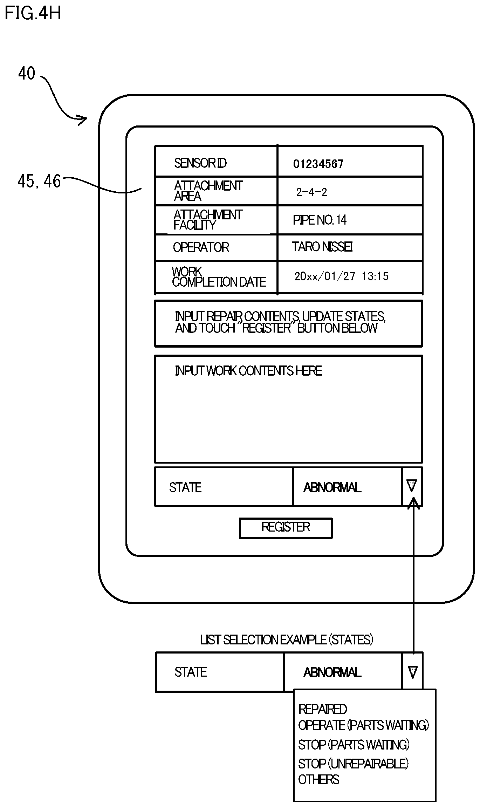

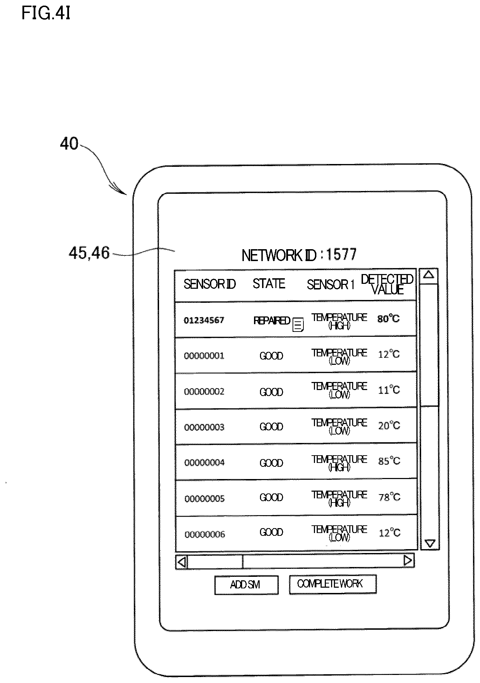

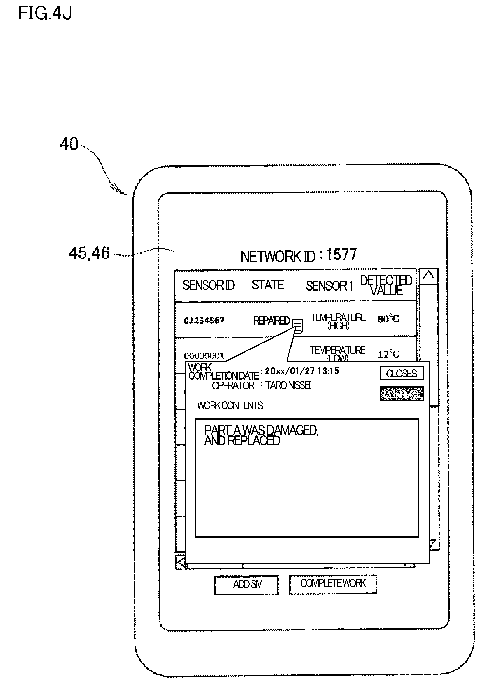

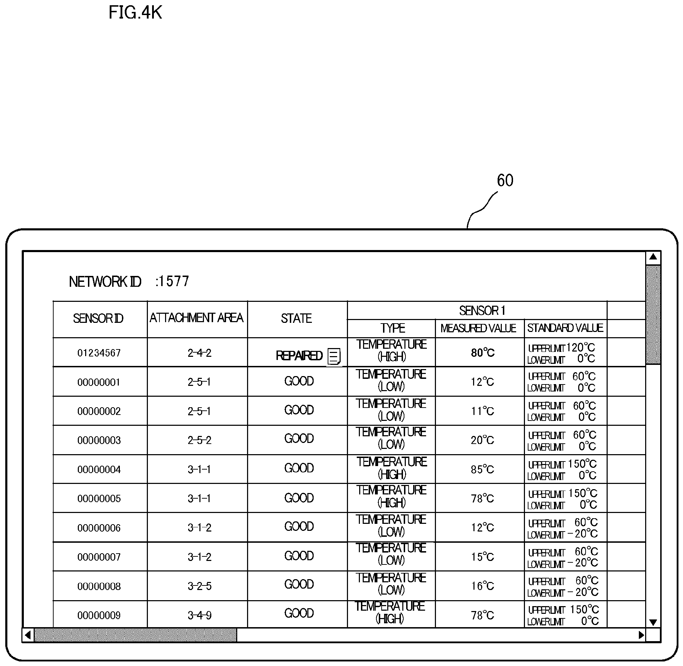

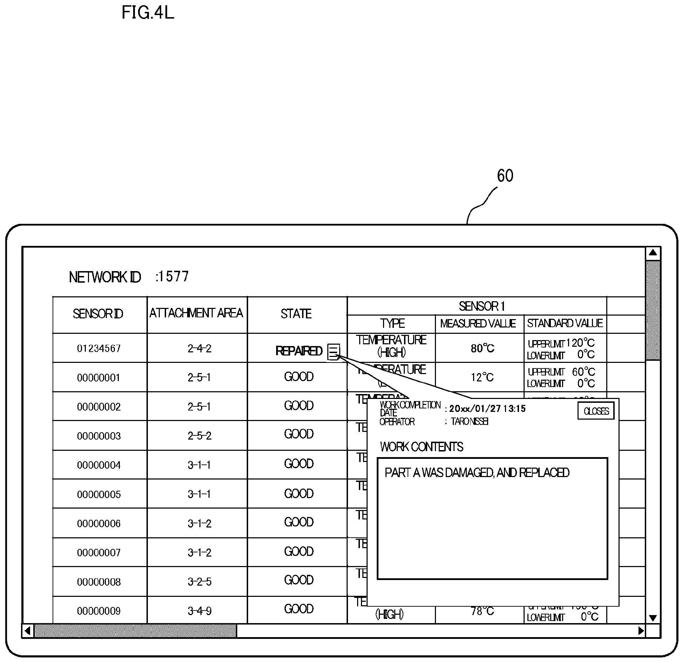

An example of an operation when performing maintenance work of the plant instrument is described with reference to Figs. 4A, 4B, 4C, 4D, 4E, 4F, 4G, 4H, 4I, 4J, 4K, and 4L. The operation when performing maintenance work is started upon occurrence of a state of "Check required" in the states of the plant instrument collected in "2-1. Collection of Status of Plant Instruments" (a state in which a measured value exceeds a standard value), for example. Occurrence of a state of "Check required" in the state of the plant instrument is found by the manager of the plant viewing the plant information (data 002) stored in the cloud server 30 using the laptop computer 60 as illustrated in Fig. 3C, for example. If the manager who found that the state of "Check required" occurred in the state of the plant instrument in step ST501 determines that the state of the plant instrument is in an abnormal state based on a difference between the measured value and the standard value, duration of the state, and so forth, updates the state of the plant instrument ("Check required" to "Abnormal"). Fig. 4C illustrates a display example of the laptop computer 60 when the state of the plant instrument is updated using the laptop computer 60. In the example illustrated in Fig. 4C, the state of the plant instrument of the sensor module 10 specified by sensor ID:01234567 connected to network ID:1577 is updated to "Abnormal" from "Check required." In step ST502, the manager instructs the operator carrying the tablet terminal 40 to perform repair work and so forth, for example, by an e-mail, a document, and so forth. If the state of the plant instrument of the specific sensor module 10 is set to "Abnormal" in the plant information (data 002) in the cloud server 30, a report start signal may be transmitted to the sensor module 10 via the WSN from the cloud server 30 or the sensor gate module 20 to make the report unit 15 of the sensor module 10 of which state of the plant instrument is set to "Abnormal" perform a report operation (blink or output voice).

In step ST503, the operator acquires the plant information (data 002) using the tablet terminal 40. Fig. 4D illustrates an example of the touch panels 45 and 46 of the tablet terminal 40 when the plant information (data 002) is acquired using the plant application.

In step ST504, the operator selects the sensor module 10 which is set to an abnormal state (a work target SM). In the example illustrated in Fig. 4D, the operator selects the sensor module 10 specified by sensor ID:01234567.

In step ST505, the operator moves inside of the plant and searches for the work target SM with a RFID by holding the tablet terminal 40 over the sensor module 10. When the tablet terminal 40 is held over the sensor module 10, a read signal is automatically transmitted to the sensor module 10 on an electric wave or a magnetic field by the tag control unit 43. Fig. 4E illustrates an example of the touch panels 45 and 46 of the tablet terminal 40 when the sensor module 10 specified by sensor ID:01234567 is selected in the example illustrated in Fig. 4D. In the example illustrated in Fig. 4E, "Detected value of sensor 1 is abnormal" is displayed, indicating that a detected value of the temperature on the high temperature side which is one of the detection items is abnormal.

In the example illustrated in Fig. 4E, attachment information of the sensor module 10 in which an abnormal state is detected is displayed. The attachment area of the attachment information illustrated in the example illustrated in Fig. 4E is determined at the time of attachment of the sensor module 10, for example. Therefore, the operator can easily recognize the position to which the sensor module 10 in which an abnormal state is detected is attached.

In the example illustrated in Fig. 4E, "Hold tablet over target SM" is displayed. In this state, the operator holds the tablet terminal 40 over the sensor module 10, whereby the tag control unit 43 of the tablet terminal 40 can automatically transmit a read signal on the electric wave or the magnetic field.

In step ST506, the sensor module 10 which received the electric wave or the magnetic field including the read signal restores to a power on state from a sleep state by port interruption. Specifically, the tag unit 14 (specifically, the tag IC 14-1) is started first, and the tag unit 14 outputs a start signal to the power control unit 17, for example. The power control unit 17 into which the start signal is input supplies power at least to the control unit 11. Then the control unit 11 is started and the sensor module is set to a power on state.

In step ST507, the control unit 11 of the sensor module 10 acquires current date information from the clocking unit 18, and stores the acquired information in the tag IC 14-1. Then, the WSN time at which the tablet terminal 40 is held over the sensor module 10 is stored in the tag IC 14-1. The date clocked by the clocking unit 18 of the sensor module 10 is synchronized with the WSN time as described above, and processing time of steps ST506 and 507 shall be ignorable.

In step ST508, the tag IC 14-1 returns, to the tablet terminal 40, instrument information (data 508) including the sensor ID and the date information (WSN time) stored in the tag IC 14-1 in accordance with the read signal on the electric wave or the magnetic field generated by the tag antenna 14-2. Therefore, the tablet terminal 40 can automatically acquire the sensor ID and the date information.

In step ST509, the control unit 11 of the sensor module 10 reduces a power supply amount to the power control unit 11 after transmission of instrument information, and returns to a sleep state.

In step ST510, the control unit 41 of the tablet terminal 40 determines whether the sensor ID of the sensor module 10 selected in step ST502 and the sensor ID acquired in step ST508 match each other (sensor ID matching).

If the sensor ID of the sensor module 10 selected in step ST502 and the sensor ID acquired in step ST503 do not match, in step ST511, an example illustrated in Fig. 4F is displayed on the touch panels 45 and 46 of the tablet terminal 40, and voice is output from the speaker 44, for example (a match result report). The example illustrated in Fig. 4F indicates that the sensor ID of the sensor module 10 selected in step ST502 and the sensor ID acquired in step ST508 do not match. Further, similarly, voice is output indicating that the sensor ID of the sensor module 10 selected in step ST502 and the sensor ID acquired in step ST508 do not match (the match result report). Therefore, the operator does not perform the repair work and so forth with respect to the plant instrument to which the sensor module 10 over which the tablet terminal 40 is held in step ST503 is attached. When the example illustrated in Fig. 4F is displayed on the touch panels 45 and 46 of the tablet terminal 40, the operator holds the tablet terminal 40 over another sensor module 10, whereby a sensor ID of the another sensor module 10 can be acquired and determination of step ST510 is made again.

If the sensor ID of the sensor module 10 selected in step ST502 and the sensor ID acquired in step ST508 match each other, in step ST511, that the sensor IDs match each other is displayed on the touch panels 45 and 46 of the tablet terminal 40 for example, as an example illustrated in Fig. 4G, and similarly, voice is output from the speaker 44 indicating that the sensor IDs match each other (the match result report). When the example illustrated in Fig. 4F is displayed and output as voice, it can be checked that the sensor module 10 over which the operator holds the tablet terminal 40 is the sensor module 10 in which an abnormal state is detected. That is, the speaker 44 and the touch panels 45 and 46 function as a report unit which reports whether the sensor ID of the sensor module 10 selected in step ST502 and the sensor ID acquired in step ST508 match each other. Therefore, the operator can easily specify a plant instrument as a work target, and can perform the maintenance work, such as repair, and shorten work hours.

If the sensor ID of the sensor module 10 selected in step ST502 and the sensor ID acquired in step ST508 match each other, step ST512 is executed. In step ST512, the control unit 41 of the tablet terminal 40 transmits date information acquired in step ST508 to the clocking unit 45 of the tablet terminal 40, and the clocking unit 45 clocks date in synchronization with the date information (the WSN time). Therefore, date clocked in the tablet terminal 40 synchronizes with the WSN time. Although the processing time of steps ST510 and 511 is ignorable, the date may be corrected in consideration of the processing time.

In step ST513, the operator performs maintenance work, such as repair of the plant instrument and touches "Work completed" in the example illustrated in Fig. 4G when maintenance is completed. Then, the process proceeds to step ST514. At this time, the tablet terminal 40 stores date of the clocking unit 45 when the "Work completed" is touched (synchronized with the WSN time), that is, the work completion date, in the storage unit 48 of the tablet terminal 40.

In step ST514, the operator operates the tablet terminal 40 and inputs work contents (work history input). In the example illustrated in Fig. 4G, when "Work completed" is touched, an example illustrated in Fig. 4H is displayed on the touch panels 45 and 46 of the tablet terminal 40. In the example illustrated in Fig. 4H, the sensor ID, the attachment area, an attachment facility, the operator, and the work completion date are displayed. Regarding the information about the operator, information stored in the storage unit 48 of the tablet terminal 40 in advance is displayed automatically, and regarding the work completion date, information stored in the storage unit 48 of the tablet terminal 40 is displayed automatically. In example illustrated in Fig. 4H, a space in which the operator inputs contents of maintenance work, such as the repair work, of the plant instrument which the operator performed in text, and a column in which the operator inputs the state of the plant instrument after performing the maintenance work, such as repair, of the plant instrument by selecting from a list are displayed. When the operator touches "Register" in the example illustrated in Fig. 4H after completing the input, the process proceeds to step ST515.

In step ST515, the tablet terminal 40 transmits the work contents input in step ST514 and the state of the plant instrument to the cloud server 30 together with the sensor ID, the work completion date, and the information about the operator (work history registration, plant instrument state update). That is, the data transmitted in step ST506 is data 515 illustrated in Fig. 4B. Work completion date information included in the data 515 is date when "Work completed" is touched in the example illustrated in Fig. 4G (synchronized with the WSN time).

In step ST516, the cloud server 30 makes the received data 515 reflected on the plant information (data 002) stored in the storage unit 33 of the cloud server 30 (plant information update). Information about the work completion date, the operator, and the work contents included in the received data 515 is stored in the storage unit 33 as work history corresponding to the sensor ID. When the operator checks the plant information (data 002) after reflection of data 515 on the plant information (data 002) is completed in step ST516, an example illustrated in Fig. 4I is displayed on the touch panels 45 and 46 of the tablet terminal 40. In the example illustrated in Fig. 4I, "Repaired" is displayed in the column of the sensor module 10 specified by sensor ID:01234567 which is the sensor module 10 attached to the plant instrument for which the operator performed repair work and so forth. A work history tag is displayed near the display of "repair completed." In the example illustrated in Fig. 4I, "Complete work" for terminating the plant application is displayed. Until "Complete work" is touched, data of the work history may be displayed as in the example illustrated in Fig. 4J by touching the work history tag, and the contents of the work history may be corrected on the tablet terminal 40. When "Complete work" is touched, registration determination information is transmitted to the cloud server 30 from the tablet terminal 40. Upon receiving of the registration determination information, the cloud server 30 changes the state of the work history from a correctable state into an uncorrectable state.

In step ST517, the operator performs work completion report to the manager by an e-mail or a document after checking "Repaired" in the example illustrated in Fig. 4I, for example. In step ST581, when the manager who received the work completion report views the plant information (data 002) stored in the cloud server 30 using the laptop computer 60, an example illustrated in Fig. 4K is displayed on the screen of the laptop computer 60. In the example illustrated in Fig. 4K, "Repaired" is displayed in the column of the sensor module 10 specified by sensor ID:01234567 which is the sensor module 10 attached to the plant instrument for which the operator performed repair work and so forth, whereby it can be checked that the occurred abnormal state has been eliminated. If completion of the maintenance work, such as repair, cannot be checked, it can be considered as a proof for making an instruction to the operator, which may contribute to enhancement of work monitoring. Further, the work history tag is displayed in the example illustrated in Fig. 4K, and when the work history tag is clicked by a mouse operation (selection), an example illustrated in Fig. 4L is displayed. In the example illustrated in Fig. 4L, the work completion date, the operator, and the work contents stored in the cloud server 30 are displayed as the work history. If there are a plurality of work histories, the work histories may be sequentially displayed in a switched manner, or may be displayed as a list of the work histories.

In the operation when performing the maintenance work of the plant instrument, the plant instrument status collection system 1 determines whether the sensor ID of the sensor module 10 selected by the operator and the sensor ID of the sensor module 10 over which the operator holds the tablet terminal 40 match each other and, if these sensor IDs match each other, synchronizes date clocked by the tablet terminal 40 (the clocking unit 45) with the date information acquired from the sensor module 10. The sensor ID of the sensor module 10 selected by the operator and the work completion date information clocked by the tablet terminal 40 (the clocking unit 45) are transmitted to the cloud server 30 from the tablet terminal 40 together with work contents information indicating work contents. Therefore, when the operator registers the work contents, it is unnecessary to manually input the sensor ID and the work completion date, whereby input work of the information can be simplified and accurate management of work information can be realized. Especially since the date synchronized with the date information in the sensor module 10 is stored in the cloud server 30 as the work completion date, more accurate work completion date can be accumulated. Therefore, operation tendency of the plant instrument can be known accurately, which contributes to stabilization of the plant operation. Further, since the clocking unit 18 of the sensor module 10 clocks date in synchronization with other sensor modules 10, the sensor gate module 20, the cloud server 30 and/or the repeater 50 via the WSN, the tablet terminal 40 can also be synchronized with the WSN time, whereby more accurate time management with no time lag from the WSN time is realized.

Although the operation when performing the maintenance work is described as an example in the above embodiment, steps ST501 to ST518 may also be executed for periodic inspection work in which the operator visually checks the state of the plant instrument, daily operation work in which operation adjustment of the plant instrument are performed and so forth besides the maintenance work. Also in these work, as in the maintenance work, it is unnecessary for the operator to manually input the sensor ID and the work completion date when registering the work contents, whereby accurate management of work information can be performed.

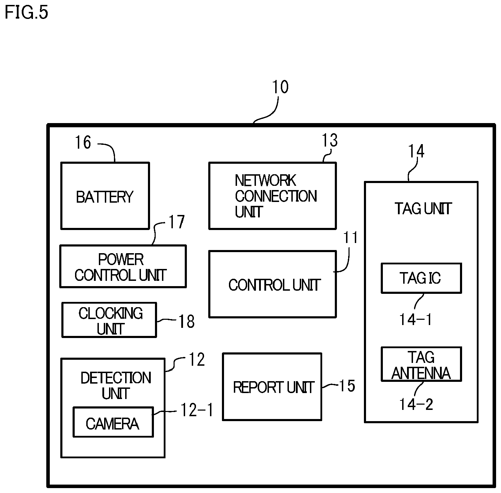

Further, in the detection apparatus 10, as illustrated in Fig. 5, the detection unit 12 may include a camera 12-1 which captures an image of the plant instrument as a state of the plant instrument, and transmit the image of the plant instrument to the data storage apparatus 30 as data indicating the state of the plant instrument. Hereinafter, the detection apparatus 10 provided with the camera 12-1 is also referred to as a "camera module 10." The plant instrument status collection system 1 may also be provided with both a sensor module 10 not equipped with the camera 12-1 and the camera module 10.

The camera 12-1 is constituted by a CMOS imaging element and a lens which receives light from the outside, for example. An image captured with the imaging element is transmitted to the control unit 11, and the control unit 11 performs an image compression process (for example, JPEG) and an image division process so that the received image becomes suitable for transmission by a network connection.

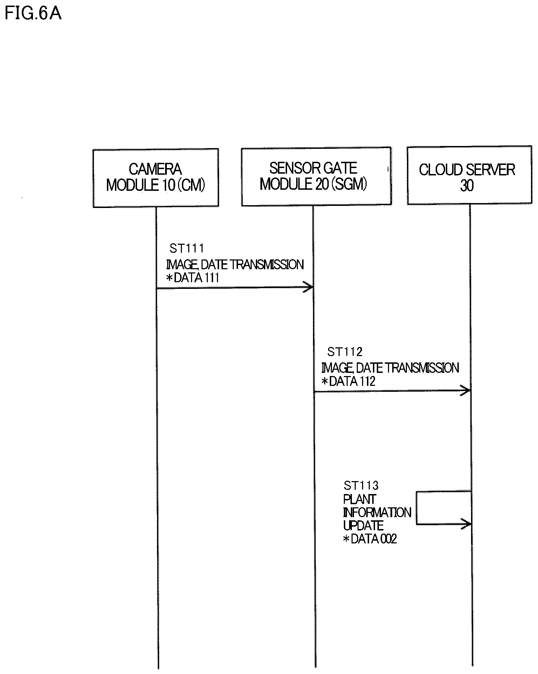

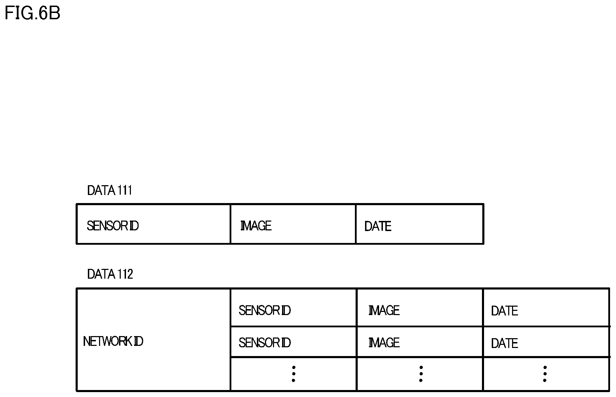

An example of an operation of the plant instrument status collection system 1 to collect states of the plant instrument with the camera module 10 is described with reference to Figs. 6A and 6B.

In step ST111, as in step ST101 of Fig. 3A, the camera module 10 restores from a sleep state and is set to a power on state with the timer for each predetermined detection interval, captures an image of a predetermined range in which the camera module 10 is installed (including at least a part of the plant instrument), and transmits the image to the sensor gate module 20 together with the sensor ID of itself (the sensor gate module 20) and date (image capturing date) clocked by the clocking unit 18. That is, the data transmitted in step ST111 is data 111 illustrated in Fig. 6B. After transmission of the data 111, the timer is set and the camera module 10 is set to a sleep state again.

In step ST112, as in step ST102 of Fig. 3A, the sensor gate module 20 transmits the sensor ID, the image, and the date, which are received, to the cloud server 30 via the 3G/LTE together with the network ID of the WSN constructed by itself (the sensor gate module 20). That is, the data transmitted in step ST112 is data 112 illustrated in Fig. 6B.

In step ST113, as in step ST103 of Fig. 3A, the cloud server 30 makes the received data 112 reflected on the plant information (data 002) stored in the storage unit 33 of the cloud server 30, and updates the plant information (data 002). Step ST111, step ST112, and step ST113 are repeated at any time.

Therefore, the plant instrument status collection system 1 can include the image of the plant instrument and the image capturing date in the plant information with the camera module 10. The manager may connect to the cloud server 30 using the laptop computer 60, for example, and view the image and image capturing date stored in the cloud server 30. Therefore, the state of the plant instrument can be distantly monitored also with an image, and the plant management can be performed in more detail. The camera module 10 may capture an image when an image capturing start signal is received from the cloud server 30 in addition to each predetermined detection interval, and the image capturing timing is arbitrarily determined.

### INDUSTRIAL APPLICABILITY

The present invention is applicable to a plant instrument status collection system. More particularly, the present invention is applicable to a plant instrument status collection system which accurately manages work information of a plant instrument.

### DESCRIPTION OF REFERENCE NUMERALS

1 ... Plant instrument status collection system
10 ... Detection device
11 ... Control unit of detection apparatus
12 ... Detection unit of detection apparatus
13 ... Network connection unit of detection apparatus
14 ... Tag unit of detection apparatus
17 ... Clocking unit of detection apparatus
20 ... Network construction device
30 ... Data storage device
33 ... Storage unit of data storage apparatus
40 ... Mobile terminal
43 ... Tag control unit
44 ... Speaker
46 ... Display unit
47 ... Clocking unit of portable terminal
50 ... Repeater
60 ... Laptop computer.

## Claims

1. A plant instrument status collection system, comprising:
a detection apparatus, a portable terminal, a network construction apparatus, and a data storage apparatus,
wherein the detection apparatus includes a detection unit detecting a state of plant equipment disposed in a plant, a network connection unit connectable to a network constructed by the network construction apparatus, and a clocking unit clocking date, and a tag unit storing specifying information for specifying the detection apparatus and date information, and capable of contactlessly transmitting the specifying information and the date information to the portable terminal, at least transmits the state of the plant instrument detected by the detection unit and specifying information to the network construction apparatus via the network,
wherein the data storage apparatus includes a storage unit at least storing the state of the plant equipment received from the network construction apparatus, and the specifying information of the detection apparatus, and
wherein the portable terminal includes a tag control unit capable of contactlessly and automatically acquirable the specifying information and the date information which are stored in the tag unit, and is configured to be able to communicate with the data storage apparatus, selects the specifying information of any of the detection apparatus in advance, and determines whether the specifying information acquired from the tag unit and the selected the specifying information match each other, clocks date in synchronization with the date information acquired from the tag unit if these match each other, and makes it possible to transmit the selected specifying information clocked work completion date information together with work contents information indicating predetermined work contents with respect to the plant instrument to the data storage apparatus.

2. The plant instrument status collection system according to claim 1, wherein the clocking unit clocks date via the network in synchronization with other detection apparatus, the network construction apparatus and/or the data storage apparatus.

3. The plant instrument status collection system according to claim 1, wherein the portable terminal is provided with a report unit reporting whether the specifying information acquired from the tag unit and the specifying information acquired from the data storage apparatus match each other.
